# FASCICULE DE BREVET EUROPEEN

(11) **EP 0 791 877 B1**
(45) Date de publication et mention de la délivrance du brevet: **22.05.2002**
(21) Numéro de dépôt: 97400398.0
(22) Date de dépôt: 24.02.1997
(51) Int. Cl.: G06F 1/00

(54) **Dispositif électronique délivrant une référence temporelle sûre pour la protection d'un logiciel**
Elektronische Einrichtung zur Erzeugung einer sicheren Zeitreferenz zum Schutz einer Software
Electronic device providing a secure time reference for the protection of a program

(30) Priorité: 26.02.1996 FR 9602340
(43) Date de publication de la demande: 27.08.1997
(73) Titulaire: FRANCE TELECOM, 75015 Paris (FR)
(72) Inventeur: Arditti, David, 92140 Clamart (FR); Stoffel, Laurent, 92130 Issy les Moulineaux (FR)
(74) Mandataire: Dubois-Chabert, Guy

(56) Documents cités:
- WO-A-88/05941
- WO-A-92/12485
- SIEMENS MAGAZINE OF COMPUTERS & COMMUNICATIONS, (COM), vol. XIV, no. 5, Septembre 1986, MUNCHEN DE, pages 14-16, XP002018528 D. KRUSE: "Guarding the operating system"

## Description

### Domaine technique

La présente invention concerne un dispositif électronique délivrant une référence temporelle sûre pour la protection d'un logiciel, ce dispositif étant apte à être connecté à un ordinateur.

### Etat de la technique antérieure

Tous les ordinateurs, du calculateur scientifique au modèle familial, possèdent une horloge interne et disposent ainsi d'une référence temporelle. De nombreux systèmes ou logiciels utilisent une telle référence temporelle pour différentes fonctionnalités non liées à leur protection. Une telle référence, en effet, est accessible et modifiable à l'aide du système d'exploitation de l'ordinateur concerné. Elle ne constitue donc pas une référence sûre.

Le piratage de logiciels (copies illicites, utilisation non conforme à la licence d'utilisation, ...) est très courant et constitue un préjudice important pour leurs éditeurs. De nombreux procédés de protection ont été utilisés à ce jour avec plus ou moins d'efficacité.

Il existe des versions de démonstration des logiciels, dans lesquelles certaines fonctionnalités importantes ne sont pas disponibles, mais aucune licence ne permet l'utilisation d'un logiciel avec toutes ses fonctionnalités pour une durée limitée. Ainsi la location ou la location-vente de logiciels, n'existe pas, car il n'y a pas de protection adaptée à de tels concepts.

De manière générale, il est très intéressant de disposer d'une référence temporelle sûre pour pouvoir concevoir de nouveaux mécanismes de protection des logiciels ou des systèmes.

A l'heure actuelle, les protections les plus sûres utilisent des moyens matériels associés aux logiciels, appelés de manière générique "dongles" ou "clés électroniques". Ces moyens matériels sont de petits objets externes (boîtiers, disquettes, ...) qui peuvent être connectés aux ordinateurs notamment par leurs ports série ou parallèle. Un dongle utilise des signaux particuliers, et/ou tout autre "secret" de fabrication, permettant au logiciel de s'assurer de la présence de celui-ci au cours d'une exécution et d'accepter un échange d'informations.

Malheureusement un dispositif peut être placé en coupure entre un ordinateur et un dongle pour analyser les signaux échangés. Aussi l'utilisation d'un dongle présente les inconvénients suivants :
- si le dongle envoie toujours les mêmes signaux, un faux dongle peut alors rejouer les signaux enregistrés en fonction de ceux émis par l'ordinateur ;
- si les signaux renvoyés par le dongle sont obtenus à partir de signaux émis par l'ordinateur comme résultat d'un calcul secret, alors le logiciel dispose du même secret dans son code pour vérifier l'authenticité des signaux transmis par le dongle ; par analyse du logiciel on peut alors retrouver ce secret pour réaliser ensuite un faux dongle.

Le comportement de dongles non cryptographiques peut ainsi être analysé à l'aide d'un dispositif en coupure ou par analyse du code du logiciel, pour être reproduit, par la suite, en l'absence de dongles.

Dans tous les cas de figure, les dongles actuels ne peuvent pas fournir de références temporelles, et donc a fortiori de références temporelles sûres.

De plus les dongles personnalisés pour un logiciel donné ne sont pas réutilisables par la suite pour un autre logiciel.

Certains systèmes ou logiciels distribués utilisent une référence de temps certifiée pour des fonctionnalités de sécurité. Une telle référence de temps est fournie par un ordinateur particulier (ou serveur), qui s'authentifie auprès des autres ordinateurs requérant son service. Mais cet ordinateur peut être "corrompu" par modification de son horloge interne, comme celle de n'importe quel autre ordinateur. Les autres ordinateurs lui font alors confiance mais l'heure fournie est inexacte. Un tel fonctionnement utilisé à des fins de sécurité interne à une organisation n'est pas adapté à la protection de logiciels. En effet il s'agit alors de protéger un logiciel d'une organisation contre l'utilisation illicite de celui-ci par d'autres organisations ou individus.

Un ordinateur fournissant une référence temporelle certifiée (serveur horloge) ne peut être considéré comme sûr par un éditeur de logiciel car cette machine appartient à l'utilisateur et pas à l'éditeur de logiciel.

Il existe des cartes à microprocesseur utilisant un algorithme pour permettre une authentification et une certification. Mais ces cartes, qui ne sont pas alimentées, ne peuvent pas disposer d'une horloge interne pour délivrer une heure certifiée.

Ainsi les dispositifs actuels ne permettent pas à un ordinateur de disposer d'une référence temporelle sûre pouvant être utilisée par un logiciel pour lutter contre le piratage.

L'objet de l'invention est de fournir une référence temporelle sûre dans un dongle, se connectant par exemple aux ports série ou parallèle d'un ordinateur, qu'un logiciel peut interroger pour s'assurer :
- de la satisfaction des conditions d'utilisation du logiciel ;
- de la présence du boîtier pour que le logiciel continue son exécution.

### Exposé de l'invention

La présente invention concerne un dispositif électronique de vérification de l'utilisation licite d'un logiciel, apte à être connecté à un ordinateur, ledit dispositif comportant un microcontrôleur connecté à au moins une mémoire, une horloge interne et une batterie interne dans lequel le microcontrôleur utilise un algorithme cryptographique asymétrique, qui repose sur l'utilisation d'une fonction de signature secrète et d'une fonction de vérification publique, et en ce que ledit dispositif contient la fonction de signature secrète, alors que le logiciel contient la fonction de vérification publique, caractérisé en ce qu'il comprend un compteur d'interrogations qui est incrémenté à chaque interrogation dudit dispositif, et un compteur de personnalisations qui permet de charger et de réinitialiser des "droits" d'utilisation, sous la forme de dates de début et/ou de fin de validité, de durée d'utilisation, etc..

Avantageusement le dispositif de l'invention est incorporé dans un boîtier scellé.

Avantageusement l'algorithme est un algorithme cryptographique asymétrique pris parmi les algorithmes suivants : RSA, FIAT-SHAMIR, DSA-DSS, GQ,-EL-GAMAL.

Avantageusement le dispositif de. l'invention permet de limiter l'utilisation du logiciel pour une période de validité (trois mois d'utilisation à partir de la première utilisation par exemple), de limiter l'utilisation du logiciel à un certain nombre d'utilisations, et à l'aide d'une implémentation idoine du logiciel de limiter son utilisation à une durée approximative (environ cinq cents heures, par exemple).

Le dispositif électronique de l'invention peut être rechargeable et permettre de racheter du temps d'utilisation a posteriori sur un simple appel téléphonique.

Le dispositif électronique de l'invention accepte une postpersonnalisation par des ordres certifiés, et est réutilisable

### Brève description des dessins

La figure illustre le dispositif électronique de l'invention.

### Exposé détaillé de modes de réalisation

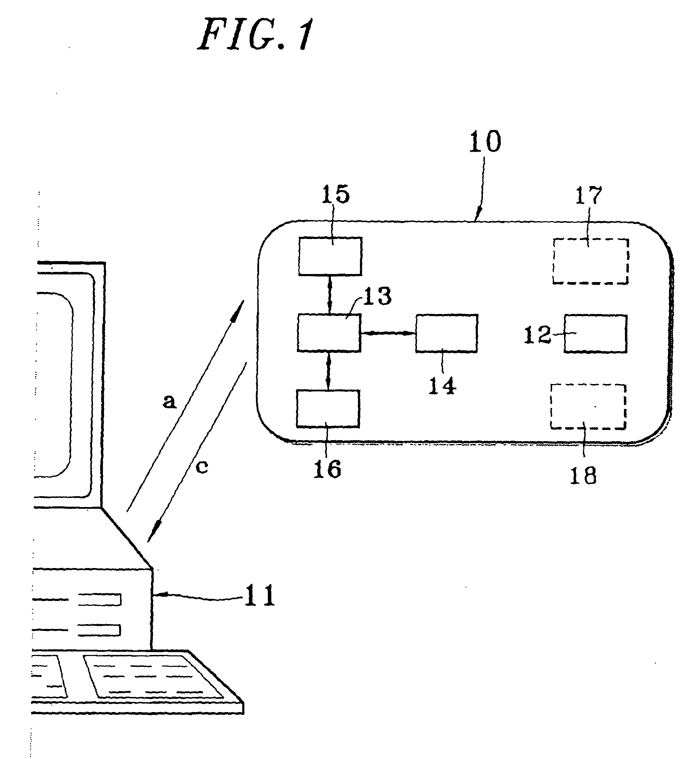

le dispositif électronique de l'invention (10), tel que représenté sur la figure 1, est apte à être connecté aux ports série ou parallèle d'un ordinateur 11. Il est alimenté par une batterie interne (12), et contient notamment un microcontrôleur (13), connecté à des mémoires par exemple de type RAM (14) et ROM (15), et une horloge interne (16).

Ce dispositif peut être incorporé dans un boîtier scellé. Un tel boîtier peut, s'il est ouvert, se réinitialiser ou se détruire par tout moyen physique approprié, incorporé dans celui-ci. Un tel moyen physique connu de l'homme de l'art permet d'éviter une diffusion d'informations secrètes et rend incidemment toute utilisation ultérieure du logiciel impossible.

Le dispositif de l'invention est reconnu par le logiciel considéré à l'aide d'un mécanisme de signature reposant sur un algorithme cryptographique asymétrique, par exemple du type RSA (ou Rivest-Shamir-Adelman), Fiat-Shamir, DSA-DSS, GQ (ou Guillou-Quisquater), El Gamal, comme décrit dans de nombreux documents et notamment l'ouvrage intitulé "Applied Cryptography" de Bruce Scheiner (Edition John Wiley & Sons, 2ème édition, partie III, chapitres 19 à 21, pages 461 à 512, et partie IV).

Un algorithme de signature asymétrique repose sur l'utilisation d'une fonction de signature secrète et d'une fonction de vérification publique. La connaissance d'une fonction ne permet pas de connaître l'autre. Le dispositif contient la fonction secrète, alors que le logiciel à protéger contient la fonction publique qui ne permet qu'une vérification. Le logiciel à protéger ne contient donc aucun secret, car la connaissance de la fonction publique ne permet pas de signer des messages.

Toutes les interrogations du dispositif sont effectuées par le logiciel, qui lui envoie un nombre aléatoire pour éviter le rejeu, qui consiste pour une personne étrangère à observer une transaction quelconque entre deux dispositifs et à exécuter à nouveau cette transaction. Lorsque le dispositif répond, le nombre aléatoire est renvoyé avec la réponse à l'interrogation et la signature des données. Dans le cas particulier de l'algorithme RSA, la signature permet, par application de la fonction publique, de reconstituer les données.

L'observation des échanges entre l'ordinateur et le dispositif de l'invention n'est pas utilisable par une personne étrangère car ces échanges sont non déterministes et non rejouables (présence de l'aléa).

Si on prend l'exemple de l'algorithme RSA, S étant la fonction de signature secrète, P la fonction de vérification publique, a un nombre aléatoire, H l'heure (et la date), / indiquant l'opérateur concaténation, on a la signature : c = S (H/a), et la fonction de vérification publique P(c) = H/a.

Lorsque le dispositif de l'invention est interrogé, il ne répond que si les modalités prévues sont toutes satisfaites (date de fin de validité non atteinte, durée d'utilisation non atteinte, . .).

On va, à présent, considérer le cycle de vie d'un boîtier ; lors de la fabrication, l'éditeur du logiciel réalise :
- l'introduction du numéro de série du boîtier ;
- l'introduction de la fonction secrète asymétrique de l'éditeur ;
- la mise à l'heure de l'horloge ;
- l'initialisation du compteur d'interrogations (17) : celui-ci, qui est incrémenté à chaque interrogation du boîtier, permet de faire une correspondance entre le nombre d'utilisations du logiciel et une certaine durée d'utilisation du logiciel ; ce qui présuppose une implémentation appropriée du logiciel ;
- l'introduction de la date de début de validité, de la date de fin de validité, de la durée d'utilisation...

Ces données ne sont plus modifiés jusqu'à une réinitialisation complète du boîtier (réutilisation). Elles seront appelées par la suite "droits d'utilisation".

Les procédures de personnalisation et de postpersonnalisation sont mises en oeuvre avant/pendant la vente (personnalisation) du logiciel et éventuellement en cours d'utilisation (postpersonnalisation) pour mettre à jour les données relatives à l'utilisation du logiciel.

Si le dispositif de l'invention est utilisé comme une horloge certifiée sans limitation de durée, des valeurs particulières sont attribuées aux registres correspondant à la date de fin de validité et à la durée d'utilisation.

Pour réaliser les échanges d'information le dispositif de l'invention accepte des ordres d'initialisation/ mise à jour des droits. Ces ordres sont certifiés par une procédure classique. Les certificats sont calculés par l'éditeur de logiciel grâce à un algorithme symétrique et à une clé secrète, qui donne son pouvoir d'attribution des droits à l'éditeur. Cette clé est contenue dans ledit dispositif et partagée avec l'éditeur. Chaque boîtier possède une clé symétrique propre. L'éditeur est en mesure de retrouver toutes ces clés par un procédé classique de diversification d'une clé mère à partir du numéro de série du boîtier.

Un fichier de personnalisation contient les droits et leur certificat. Il est livré à l'utilisateur lors de l'achat du logiciel ou d'une mise à jour des droits. Ce fichier ne contient aucune information secrète.

Un tel fonctionnement permet une gestion des droits en absolu (date, nombre d'utilisations). Pour gérer ces éléments de façon incrémentale (ajouter 100 utilisations par exemple) il faut se prémunir contre le rejeu de la postpersonnalisation. Dans ce but, le dispositif possède un compteur de personnalisations (18).

Initialisé à 0, ce compteur est pris en compte dans le calcul des certificats. Le boîtier accepte la mise à jour des droits si la valeur transmise est strictement supérieure à la valeur courante. La valeur transmise est alors affectée au compteur.

La réinitialisation totale du boîtier, qui permet sa réutilisabilité, n'a pas besoin d'être certifiée.

## Revendications

1. Dispositif électronique de vérification de l'utilisation licite d'un logiciel, apte à être connecté à un ordinateur (11), ledit dispositif comportant un microcontrôleur (13) connecté à au moins une mémoire (14, 15), une horloge interne (16) et une batterie interne (12), dans lequel le microcontrôleur utilise un algorithme cryptographique asymétrique, qui repose sur l'utilisation d'une fonction de signature secrète et d'une fonction de vérification publique, ledit dispositif contenant la fonction de signature secrète, alors que le logiciel contient la fonction de vérification publique, **caractérisé en ce qu'**il comprend un compteur d'interrogations (17) qui est incrémenté à chaque interrogation dudit dispositif, et un compteur de personnalisations (18) qui permet de charger et de réinitialiser des "droits" d'utilisation, sous la forme de dates de début et/ou de fin de validité, de durée d'utilisation.

2. Dispositif selon la revendication 1, **caractérisé en ce que** ledit dispositif est connecté audit ordinateur par ses ports série ou parallèle.

3. Dispositif selon la revendication 1, **caractérisé en ce qu'**il est incorporé dans un boîtier scellé.

4. Dispositif selon la revendication 1, **caractérisé en ce que** l'algorithme est un algorithme cryptographique asymétrique pris parmi les algorithmes suivants : RSA, FIAT-SHAMIR, DSA-DSS, GQ, EL-GAMAL.

## Patentansprüche

1. Elektronische Vorrichtung zur Überprüfung der rechtmäßigen Verwendung von Software, die mit einem Computer (11) verbunden werden kann, wobei die Vorrichtung einen Mikro-Controller (13) umfaßt, der mit mindestens einem Speicher (14,15), einem internen Taktgeber (16) und einer internen Batterie (12) verbunden ist, wobei der Mikro-Controller einen asymmetrischen Kryptographiealgorithmus anwendet, der auf der Verwendung einer geheimen Signaturfunktion und einer öffentlichen Verifizierungsungsfunktion beruht, wobei die Vorrichtung die geheime Signaturfunktion enthält, während die Software die öffentliche Verifizierungsungsfunktion enthält, **dadurch gekennzeichnet, daß** sie (die Vorrichtung) einen Abfragezähler (17) umfaßt, der bei jeder Abfrage der Vorrichtung fortgeschrieben wird, sowie einen Personalisierungszähler (18), der ein Laden und Re-Initialisieren von Benutzungs-"Rechten" in Form von Anfangs- und/oder Enddaten der Gültigkeit, der Benutzungsdauer ermöglicht.

2. Vorrichtung nach Anspruch 1, **dadurch gekennzeichnet, daß** die Vorrichtung mit dem Computer über seine seriellen oder parallelen Ports verbunden ist.

3. Vorrichtung nach Anspruch 1, **dadurch gekennzeichnet, daß** sie in ein versiegeltes Gehäuse aufgenommen ist.

4. Vorrichtung nach Anspruch 1, **dadurch gekennzeichnet, daß** der Algorithmus ein asymmetrischer Kryptographiealgorithmus ist, der unter den folgenden Algorithmen ausgewählt ist: RSA, FIAT-SHAMIR, DSA-DSS, GQ, EL-GAMAL.

## Claims

1. Electronic device for verifying the lawful use of a program, adapted to be connected to a computer (11), the said device comprising a microprocessor (13) connected to at least one memory (14, 15), an internal clock (16) and an internal battery (12), in which the microprocessor uses an asymmetric cryptographic algorithm, which is based on the use of a secret signature function and a public verification function, the said device containing the secret signature function, whereas the program contains the public verification function, **characterised in that** it comprises an interrogation counter (17) which is incremented for each interrogation of the said device, and a personalisation counter (18) which allows the loading and the re-initialisation of the rights of use, in the form of start and end dates of validity, of the length of use.

2. Device according to claim 1, **characterised in that** the said device is connected to the said computer by serial or parallel ports.

3. Device according to claim 1, **characterised in that** it is incorporated in a sealed box.

4. Device according to claim 1, **characterised in that** the algorithm is an asymmetric cryptographic algorithm chosen from the following algorithms: RSA, FIAT-SHAMIR, DSA-DSS, GQ, EL-GAMAL.
